Europäisches Patentamt

European Patent Office

Office européen des brevets

(11) Numéro de publication: **0 047 706**
**A2**

# DEMANDE DE BREVET EUROPEEN

(21) Numéro de dépôt: **81420129.9**

(22) Date de dépôt: **27.08.81**

(51) Int. Cl.³: **B 62 K 7/04,** B 62 K 5/06, B 62 K 27/12

(30) Priorité: **09.09.80 FR 8019870**

(43) Date de publication de la demande: **17.03.82 Bulletin 82/11**

(84) Etats contractants désignés: **AT BE CH DE GB IT LI NL SE**

(71) Demandeur: **Ramond, Marcel, 159 bis quai de Valmy, F-75010 Paris (FR)**

(72) Inventeur: **Ramond, Marcel, 159 bis quai de Valmy, F-75010 Paris (FR)**

(74) Mandataire: **Buttet, Roger et al, "Cabinet Charras" 3, Place de l'Hôtel-de-Ville, F-42000 Saint-Etienne (FR)**

(54) **Véhicule du type tricycle notamment équipé d'un chariot conteneur amovible.**

(57) Il est connu de fixer entre les roues arrières d'un tricycle un moyen conteneur du type panier ou caisse basculante. Le but recherché selon l'invention est la création d'un véhicule du type tricycle conformé pour permettre le transport d'un chariot du type «Caddy», de façon à pouvoir utiliser le chariot en tant que tel, d'une manière entièrement indépendante du véhicule.

Selon l'invention, le châssis ou ossature entre les deux roues (2) et (3) présente une structure portante (S) qui est équipée de rampes pour coopérer avec des parties d'appui fixe ou à roulement (31) que présente d'une manière correspondante un chariot conteneur amovible (E) qui peut ainsi, à volonté, soit être engagé et positionné sur la structure (S) en dégageant ses roues (28) du sol, soit ramené en contact avec le sol pour son utilisation en chariot seul; un ou des moyens de verrouillage ou de retenue du chariot en position étant prévus sur une partie appropriée du véhicule ou de la structure portante.

EP 0 047 706 A2

0047706

– 1 –

Véhicule du type tricycle notamment équipé d'un chariot conteneur amovible.

La présente invention concerne un véhicule du type tricycle notamment équipé d'un chariot conteneur amovible, plus particulièrement adapté aux transports de toutes sortes et notamment aux transports d'achats effectués dans les villes et agglomérations compte tenu de ce qu'il existe des magasins à grande, petite ou moyenne surface et des zones piétonnes de plus en plus étendues.

On observe d'une part, qu'il est important de disposer d'un véhicule de transport, de conception économique, et d'autre part, à partir des zones piétonnes plus ou moins étendues dans lesquelles ce véhicule ne peut circuler, qu'il est intéressant de disposer d'un moyen porteur à roulettes ou à roues de façon à transporter les achats effectués, convenablement et sans fatigue, dans ces zones.

On connaît déjà des véhicules du type tricycle recevant entre les roues arrière un moyen conteneur. C'est le cas par exemple de celui décrit dans le Brevet US N° 3.738.701 HOLLOWAY où le moyen conteneur est une caisse basculante manoeuvrable manuellement par un système de leviers, un siège pouvant occuper le plateau supérieur de la caisse.
On connaît également le Brevet US N° 1.838.224 HOLLOWAY, relatif à ce type de véhicule et qui constitue l'origine du Brevet US N° 3.738.701.

- 2 -                    0047706

On connaît enfin le Brevet US N° 3.592.487 MANSPERGER où la partie arrière du tricycle reçoit entre les deux roues, un conteneur sous forme de panier. Ce panier est fixé au moyen de brides d'accouplement qui constituent des moyens de fixation à demeure. On ne prévoit pas d'utiliser le panier indépendamment du tricycle. Cela n'est d'ailleurs pas possible car il s'avèrerait alors nécessaire de le démonter de l'ossature du tricycle au moyen d'outils appropriés, ce qui serait long et pénible. De plus, le panier n'est pas agencé pour être utilisé en tant que tel ; il est équipé des garde-boue du tricycle et ne présente pas de moyens de préhension.

Le but recherché selon l'invention est la réalisation d'un véhicule du type tricycle, conformé pour permettre le transport d'un chariot du type "Caddy" de façon à pouvoir utiliser le chariot en tant que tel, d'une manière entièrement indépendante du véhicule.

Ce véhicule du type tricycle qui comporte notamment un châssis ou ossature monté d'une manière stable sur au moins trois roues, des moyens de direction agissant sur au moins une roue, au moins une selle ou siège et des moyens d'entraînement et de freinage du véhicule, le châssis ou ossature, entre deux roues parallèles situées sur un même alignement axial, étant conformé pour recevoir un conteneur, ledit véhicule étant caractérisé en ce que le châssis ou ossature entre les deux roues présente une structure portante équipée notamment de rampes ou agencements analogues ou équivalents pour coopérer avec des parties d'appui fixe ou à roulement que présente d'une manière correspondante, un chariot conteneur amovible qui peut ainsi, à volonté, soit être engagé et positionné sur la structure en dégageant ses roues du sol, soit ramené en contact avec le sol pour son utilisation en chariot seul ; un ou des moyens de verrouillage ou de retenue du chariot en position, étant prévus sur une partie appropriée du véhicule ou de la structure portante.

Les avantages obtenus grâce à cette invention consistent essentiellement :

- dans sa simplicité de réalisation et son faible coût de re-

- 3 -                    0047706

vient,

- dans le nombre important de services rendus par ce véhicule,
sans aucune dépense d'énergie, en remplaçant avantageusement
les automobiles pour des distances moyennes à parcourir, notamment dans le centre des agglomérations,

- dans sa facilité d'utilisation par n'importe quelle personne
physique,

- dans son faible encombrement,

- dans son esthétique,

- dans le caractère utilitaire et sportif combiné, du véhicule.

Pour fixer l'objet de l'invention, sans toutefois le limiter,
dans les dessins annexés :

Les figures 1 et 1bis sont des vues en perspective de deux
exemples de réalisation du véhicule selon l'invention, avant
adaptation de son élément conteneur mobile.

La figure 2 est une vue partielle de face illustrant le début
de l'engagement de l'élément conteneur mobile, sur la partie
arrière du véhicule, selon l'exemple de la figure 1.

La figure 3 est une vue semblable à la figure 2, dans la phase
intermédiaire de montage de l'élément mobile, sensiblement à
mi-course sur le véhicule.

La figure 4 est une vue semblable aux figures 2 et 3, illustrant dans la phase finale, l'élément mobile engagé et positionné sur le véhicule.

La figure 5 est une vue en perspective avec une coupe partielle
illustrant un exemple de réalisation, notamment du mode de
transmission du véhicule et de la structure portante assurant
l'engagement et le positionnement de l'élément conteneur mobile, et selon la réalisation de la figure 1.

La figure 6 est à une échelle plus importante, une vue partielle de face illustrant le positionnement de l'élément mobile sur la structure portante du véhicule.

La figure 7 est une vue en coupe transversale considérée selon la ligne 7-7 de la figure 6.

La figure 8 est une vue de profil avec coupe partielle, illustrant le mode d'accrochage de la partie avant de l'élément mobile sur le véhicule.

La figure 9 est une vue en coupe selon la ligne 9-9 de la figure 5, à une échelle plus importante.

La figure 10 est à une échelle plus importante, une vue en coupe selon la ligne 10-10 de la figure 5.

La figure 11 est à une échelle plus importante, une vue en coupe selon la ligne 11-11 de la figure 5.

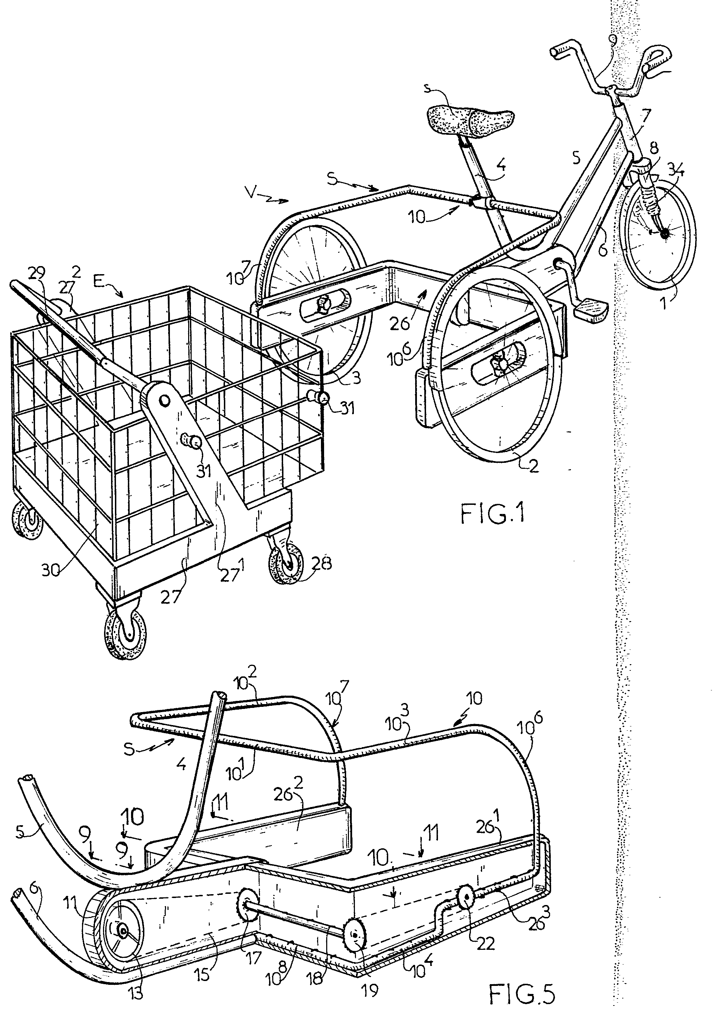

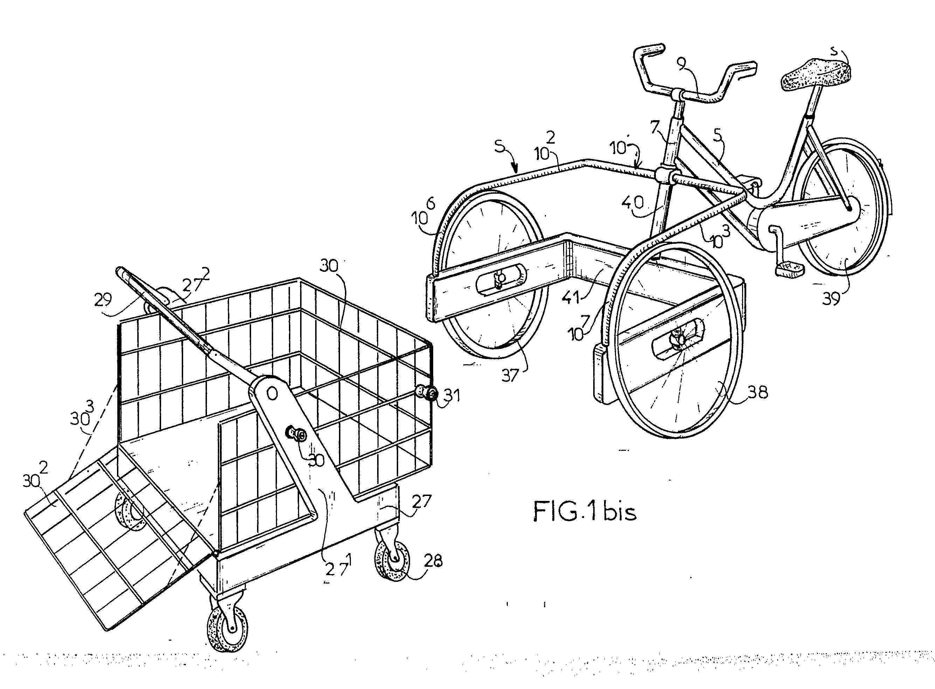

On voit figure 1, le véhicule selon l'invention désigné dans son ensemble par (V) et avant montage et positionnement du chariot conteneur amovible (E) coopérant avec une partie appropriée dudit véhicule (V).

Le véhicule (V) est du type tricycle dont l'ossature de base est montée d'une manière stable sur au moins trois roues (1 - 2 - 3) formant une triangulation. Selon l'exemple des figures des dessins, une roue (1) située à l'avant, est directrice, tandis qu'à l'arrière, les deux autres roues (2) et (3), montées parallèlement sur un même alignement axial, sont motrices. Il est bien évident que, d'une manière connue, la position inverse des roues est possible, c'est-à-dire : deux roues directrices à l'avant et une roue motrice à l'arrière, (figure 1bis).

L'ossature générale du véhicule définit un cadre (c) avec d'une manière connue, un tube de selle (4) équipé d'au moins une selle ou siège (s), un ou des tubes diagonaux (5) et (6) et un tube de direction (7) recevant la fourche avant (8) et le guidon (9). Ces différents tubes sont assemblés par tous moyens et procédés couramment employés pour les cycles.

Selon l'invention, une structure portante (S) est montée entre

- 5 -                    0047706

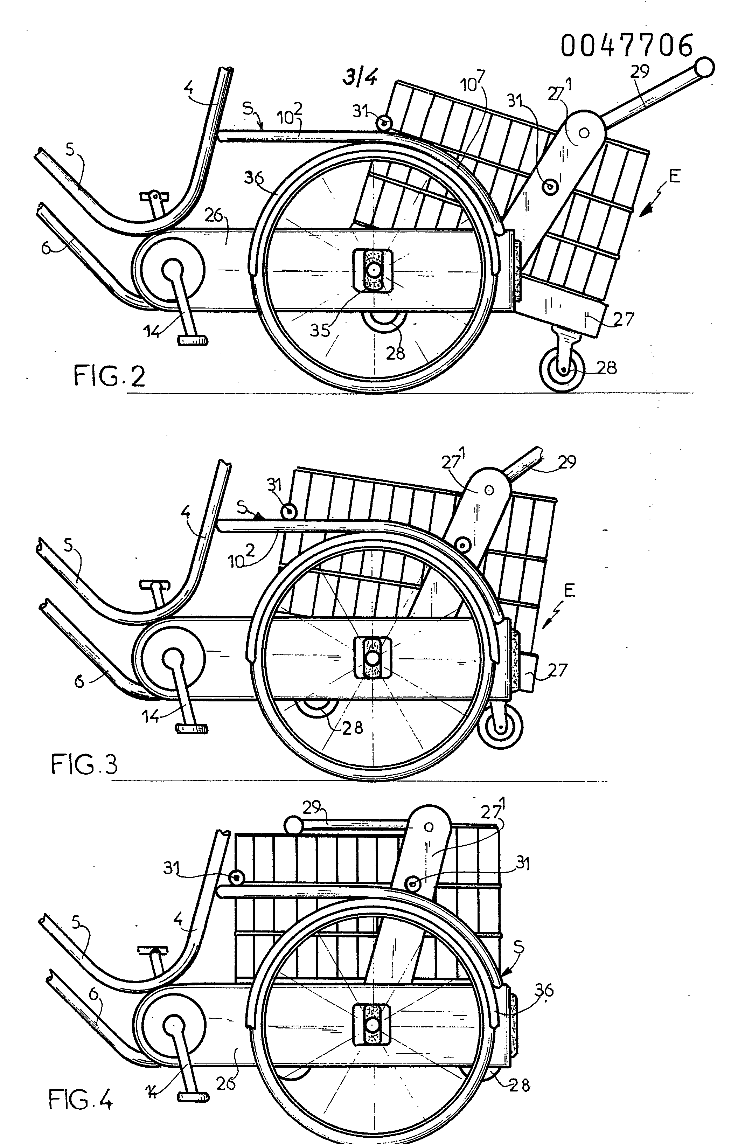

les roues parallèles (2) et (3) ou (37) et (38) du véhicule (V), en étant solidaire du cadre (c). Cette structure (S) forme des rampes ou agencements analogues ou équivalents coopérant avec des parties complémentaires que présente le chariot conteneur (E) pour autoriser, en combinaison, l'engagement progressif, le guidage et le positionnement dudit chariot conteneur (E), figures 2, 3 et 4.

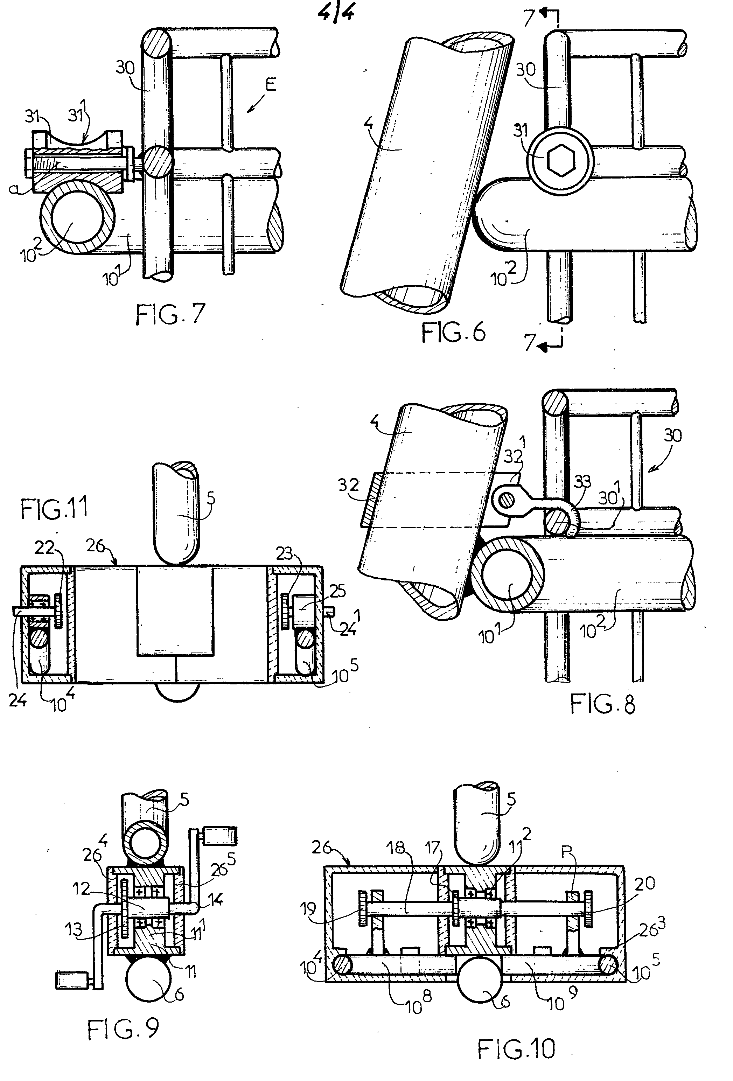

Comme le montrent notamment les figures 1 et 5, la structure (S) est formée d'éléments tubulaires de section ronde notamment en constituant un berceau d'appui et de centrage (10). Par exemple, la structure (S) comprend successivement un élément transversal ($10^1$) fixé à une hauteur convenable sur le tube de selle (4), deux éléments latéraux d'appui supérieurs ($10^2$) et ($10^3$), formés horizontalement à partir de chacune des extrémités de l'élément transversal ($10^1$), d'une manière sensiblement perpendiculaire, en étant orientés vers l'arrière du véhicule, deux autres éléments latéraux inférieurs ($10^4$) et ($10^5$) se raccordant d'une part avec les éléments latéraux supérieurs ($10^2$) et ($10^3$) en formant une rampe ($10^6$) - ($10^7$) et d'autre part, avec une partie appropriée du cadre, au moyen de deux éléments transversaux ($10^8$) - ($10^9$) équerrés intérieurement, en se raccordant sensiblement au niveau de la boîte de pédalier ($11^1$), figure 10.

Dans l'ensemble de la réalisation illustré à titre indicatif à la figure 5, la boîte de pédalier ($11^1$) est formée à l'intérieur d'un carter (11), par tout moyen, à la base et entre les deux tubes diagonaux (5) et (6), figure 9. La boîte de pédalier ($11^1$) reçoit d'une manière connue, le boîtier de pédalier (12) avec le plateau denté (13) et les manivelles (14). Le plateau denté (13) est relié par l'intermédiaire d'une chaîne de transmission (15) à un ou des pignons dentés (17) montés librement en rotation au moyen d'un palier ($11^2$) formé dans le carter (11), figure 10.

Le pignon (17) entraîné par le pédalier (  ) a pour but de commander l'entraînement en rotation des roues arrière (2) et (3) du véhicule par un système de transmission approprié, pour, d'une manière importante, laisser entre lesdites roues arrière (2) et (3), un espace entièrement libre nécessaire à l'engagement et au positionnement du chariot conteneur amovible (E) figure 1.

A cet effet, le pignon d'entraînement (17) est solidaire d'un arbre transversal (18) s'étendant de part et d'autre du carter (11) et dont les extrémités libres montées dans des paliers ( P ) reçoivent chacune des pignons dentés (19) - (20), figure 10, eux-mêmes reliés par chaîne (21) à des pignons (22) et (23), figures 5 et 11 , pour l'entraînement des axes (24) et (24$^1$) des roues arrière (2) et (3). Par exemple, les axes (24) et (24$^1$) d'entraînement des roues, sont montés dans un palier (25) solidaire transversalement des éléments latéraux inférieurs (10$^4$) et (10$^5$) de la structure portante (figure 11).

Il est bien évident que la longueur de l'arbre de transmission (18) est sensiblement égale à la distance entre les éléments latéraux (10$^2$) et (10$^3$) ou (10$^4$) et (10$^5$) de la structure portante (S).

Suivant une autre caractéristique, on prévoit de monter un carénage (26) destiné à assurer la protection de tous les éléments de transmission à partir du pédalier jusqu'aux roues arrière (2) et (3), figure 1.

Par exemple, le carénage (26) peut être obtenu à partir de deux profils en "L" (26$^1$) et (26$^2$) constitués chacun par deux demi-coquilles complémentaires et assemblables, conformées intérieurement en (26$^3$) pour se clipser sur la base de la structure portante, notamment les éléments latéraux inférieurs (10$^4$) et (10$^5$) et transversaux (10$^8$) et (10$^9$), figure 5. De même, deux flasques (26$^4$) et (26$^5$) peuvent être montés par clipsage ou autrement, en regard des faces ouvertes du carter (11) en étant agencés pour permettre le passage et le débordement des axes de manivelles (14) du pédalier , figure 9. Il est bien évident que les demi-coquilles extérieures des profils (26$^1$) et (26$^2$) du carénage (26) sont également agencées pour permettre le passage et le débordement des axes (24) et (24$^1$) des roues arrière (2) et (3).

D'une manière préférée, le carénage (26) est en matière plastique ou autre matériau ou alliage léger. On voit que le carénage (26), outre sa fonction de protection eu égard aux éléments de transmission, confère au véhicule un aspect esthétique nouveau et agréable à voir (figure 1). De même, le rayon de courbure des rampes (10$^6$) et (10$^7$) de la structure portante est sensiblement le même que celui des roues arrière (2) et (3), figures 2, 3 et 4.

Suivant une autre caractéristique de l'invention, l'élément conteneur amovible et mobile (E) se présente, comme indiqué, sous la forme générale d'un chariot du type "Caddy". Il comprend essentiellement un châssis de base (27) équipé d'organes de roulement tels que roulettes (28) dont au moins deux peuvent être pivotantes. Le châssis (27) forme transversalement, deux bras inclinés (27$^1$) et (27$^2$) dont les extrémités supérieures reçoivent à articulation libre, une poignée rabattable (29), figure 1.

Entre les deux bras (27$^1$) et (27$^2$), est monté un conteneur (30) en appui et fixé sur le châssis de base (27). Le conteneur (30) constitue un panier grillagé au moyen d'éléments filiformes verticaux et horizontaux, convenablement assemblés et espacés les uns des autres.

La largeur du châssis (27) est très sensiblement inférieure à la distance séparant les côtés latéraux de la structure portante (S) pour pouvoir s'y engager facilement.

D'une manière particulièrement importante, le chariot (E) est équipé selon ses côtés latéraux, de galets de guidage et de positionnement (31) coopérant avec le profil de la structure portante (S), notamment avec les rampes (10$^6$) et (10$^7$) puis avec les éléments horizontaux supérieurs (10$^2$) et (10$^3$). Chaque côté latéral du chariot est équipé de deux galets montés d'une part, sur les bras (27$^1$) et (27$^2$) du châssis et d'autre part, à l'avant du chariot, dans le même alignement horizontal.

Ces galets sont montés libres en rotation sur un axe (a) fixé perpendiculairement aux côtés latéraux du chariot. De plus, les galets (31) forment circulairement et transversalement, une gorge ($31^1$) de section complémentaire à la section des éléments de la structure portante (S), figures 6 et 7. Par exemple, dans le cas où les éléments de la structure portante ont une section ronde, la gorge ($31^1$) des galets (31) est semi-circulaire.

On note que les galets (31) sont positionnés en hauteur, à une distance convenable par rapport au châssis de base (27) du chariot, de sorte que les galets situés à l'avant dudit chariot puissent attaquer convenablement les rampes ($10^6$) et ($10^7$) de la structure portante (S). Le montage et le positionnement du chariot à l'arrière ou à l'avant du véhicule est particulièrement simple et rapide ; il suffit de le présenter en regard de la structure portante et de mettre les galets (31) situés à l'avant, en contact avec ladite structure portante (S). On exerce ensuite avec la poignée de guidage (29) du chariot, un léger effort de poussée ; les galets avant suivent le profil des rampes ($10^6$) et ($10^7$), permettant l'engagement initial du chariot (figure 2), jusqu'à ce que les galets arrière viennent également en contact avec les rampes ($10^6$) et ($10^7$) en suivant leur profil (figure 3) jusqu'à l'engagement total et le positionnement du chariot à l'intérieur de la structure portante (S), figure 4.

Dans cette dernière position (position route), le chariot est susceptible de coopérer avec un moyen de verrouillage et de crochetage monté soit sur la structure portante, soit sur une partie appropriée du véhicule. Par exemple, le tube de selle reçoit d'une manière fixe, un collier (32) formant une chape ($32^1$) autorisant l'articulation d'un élément en forme de crochet (33) conformé pour coopérer et se crocheter avec par exemple, un élément transversal ($30^1$) du conteneur grillagé formant panier (figure 8). Le déverrouillage libère immédiatement le chariot qui se désolidarise du véhicule.

L'élément chariot (E) peut présenter évidemment de nombreux accessoires. On peut citer par exemple, des éléments de compartiments pour bouteilles et produits fragiles, un ou des sacs imperméables avec fermeture étanche, un siège d'appoint pour enfant, etc...

D'une manière intéressante on prévoit de rendre ouvrante la partie arrière ($30^2$) du conteneur (30) pour faciliter le chargement et déchargement d'objets lourds et permettre également le transport d'objets encombrants de grande longueur. Une chaînette ($30^3$) par exemple, maintient la partie ouvrante ($30^2$) en position désirée (figure 1bis).

Dans le cas où l'ossature du véhicule (V) est conformée pour recevoir deux roues avant directrices (37) et (38) et une roue arrière motrice (39), la structure portante (S) est montée entre les roues avant du véhicule (37) et (38), figure 1bis.

La structure portante (S) demeure réalisée pour l'essentiel, comme précédemment, c'est-à-dire avec des rampes ($10^6$) et ($10^7$) ou agencements analogues ou équivalents, pour coopérer avec les parties d'appui fixe ou à roulement (31) que présente d'une manière correspondante, le chariot (E), figure 1bis. On désigne avec les mêmes repères que précédemment, les différents éléments de la structure (S).

Par exemple, les éléments transversaux supérieur ($10^1$) et inférieurs ($10^8$) - ($10^9$) sont solidaires d'un tube (40) monté libre en rotation en bout du tube de direction (7) pour commander ainsi en rotation la structure portante (S) et par voie de conséquence, les roues avant (37) et (38) montées à la base de la structure, avec éventuellement un carénage (41). Dans cette réalisation, l'entraînement de la roue (39) s'effectue d'une manière classique au moyen d'une transmission par chaîne.

De même, comme dans la réalisation précédente, le chariot est susceptible de coopérer avec un moyen de verrouillage ou de retenue formé sur la structure et/ou l'ossature du véhicule, par exemple le tube de direction.

Le véhicule (V) peut présenter de nombreux accessoires et agencements couramment employés dans les cycles ou similaires. On note par exemple :

- un système de freinage avec frein à mâchoires, sur la roue avant (1) ou arrière (39) et avec freins à tambour sur les roues arrière (2) et (3) ou avant (37) et (38), avec, dans ce dernier cas, un moyen de blocage en position des roues, évitant au véhicule d'avancer lorsque l'utilisateur engage l'élément chariot (E) dans la structure portante (S);

- des amortisseurs télescopiques (34) sur la fourche avant (8) et des amortisseurs à friction (35) pour les roues arrière (2) et (3), figure 1, ou les roues avant (37) et (38), figure 1bis ;

- un changement de vitesse ;

- un équipement d'éclairage suivant les normes en vigueur, et comprenant feux de route, feux de position, clignotants;

- des garde-boue (36).

On note enfin la possibilité d'incorporer un petit moteur électrique agissant sur les roues arrière (2) et (3) ou la roue (39), et susceptible de fonctionner en génératrice dans les descentes, pour restituer du courant en vue de recharger l'accumulateur d'alimentation dudit moteur.

Il est bien évident que l'ossature générale de base définie et illustrée par le véhicule du type tricycle est donnée à titre indicatif nullement limitatif. Toutes réalisations équivalentes entrant dans le cadre de l'invention.

Par exemple, dans le cas où le véhicule comprend une roue directrice à l'avant et deux roues motrices à l'arrière, l'entraînement de ces dernières peut s'effectuer d'une manière classique, c'est-à-dire que le pédalier entraîne directement par chaîne un pignon denté solidaire directement d'un arbre commun aux extrémités duquel sont montées les roues arrière. Comme dans la réalisation précédente, un carénage assure la protection de ces éléments de transmission. Pour éviter que l'élément chariot se trouve en contact avec les organes de transmission, lors de son engagement et/ou transport sur la structure portante, il suffit de dimensionner convenablement cette dernière, notamment en hauteur.

On prévoit également d'équiper le véhicule d'un moyen assurant la protection de l'usager contre d'éventuelles intempéries.

On note enfin, la possibilité de monter, sur notamment les éléments latéraux supérieurs d'appui $(10^2)$ et $(10^3)$ de la structure portante, un organe faisant office de siège.

0047706

Revendications de brevet.

1. Véhicule du type tricycle comportant notamment un châssis ou ossature monté d'une manière stable sur au moins trois roues (1), (2) et (3), des moyens de direction (8 - 9) agissant sur au moins une roue, au moins une selle ou siège, des moyens d'entraînement et de freinage du véhicule, le châssis ou ossature, entre deux roues parallèles (2) et (3) qui se trouvent sur un même alignement axial, étant conformé pour recevoir un conteneur, ledit véhicule étant caractérisé en ce que le châssis ou ossature entre les deux roues (2) et (3) présente une structure portante (S) équipée notamment de rampes ou agencements analogues ou équivalents, pour coopérer avec des parties d'appui fixe ou à roulement (31) que présente d'une manière correspondante un chariot conteneur amovible (E) qui peut ainsi, à volonté, soit être engagé et positionné sur la structure (S) en dégageant ses roues (28) du sol, soit ramené en contact avec le sol pour son utilisation en chariot seul ; un ou des moyens de verrouillage ou de retenue du chariot en position étant prévus, sur une partie appropriée du véhicule ou de la structure portante.

2. Véhicule selon 1, caractérisé en ce que la structure portante (S) est formée d'éléments tubulaires de section ronde notamment, en constituant un berceau d'appui et de centrage (10) avec, successivement, un élément transversal ($10^1$) fixé à une hauteur convenable du cadre du véhicule, deux éléments latéraux supérieurs d'appui ($10^2$) et ($10^3$) formés horizontalement à partir de chacune des extrémités de l'élément transversal ($10^1$), d'une manière sensiblement perpendiculaire, en étant orientés vers l'arrière du véhicule, et deux autres éléments latéraux inférieurs ($10^4$) et ($10^5$) se raccordant d'une part avec les éléments latéraux supérieurs ($10^2$) et ($10^3$) en formant des rampes d'accès ($10^6$) et ($10^7$), et d'autre part avec une partie appropriée de l'ossature générale du véhicule.

3. Véhicule selon 1 et 2, caractérisé en ce que le chariot (E) comprend essentiellement un châssis de base (27) équipé d'organes de roulement (28), ledit châssis (27) formant transversalement deux bras inclinés ($27^1$) et ($27^2$) dont les extrémités

supérieures reçoivent une poignée de guidage rabattable (29); entre lesdits bras ($27^1$) et ($27^2$) en appui sur le châssis de base, est monté un conteneur (30) constituant un panier grillagé notamment.

4. Véhicule selon 2 et 3, caractérisé en ce que le chariot (E) dont la largeur est très sensiblement inférieure à la distance séparant les côtés latéraux de la structure portante (S), est équipé selon ses côtés latéraux, de galets de guidage et de positionnement (31) coopérant avec le profil de ladite structure (S), notamment avec les rampes ($10^6$) et ($10^7$), puis avec les éléments horizontaux supérieurs d'appui ($10^2$) et ($10^3$).

5. Véhicule selon 3 et 4, caractérisé en ce que chaque côté latéral du chariot est équipé de deux galets respectivement montés sur les bras ($27^1$) et ($27^2$) du châssis (27) et à l'avant du chariot, dans le même alignement horizontal ; lesdits galets formant circulairement une section transversale complémentaire à celle des éléments de la structure portante, sont positionnés en hauteur, à une distance convenable du châssis (27), de sorte que les galets situés à l'avant du chariot attaquent convenablement les rampes ($10^6$) et ($10^7$) de la structure portante (S).

6. Véhicule selon 1, 2, 3, 4 ou 5, caractérisé en ce qu'une partie du chariot (E) coopère, après son engagement et positionnement eu égard à la structure portante (S), avec un moyen de verrouillage, de crochetage ou de retenue (32 - 33), monté soit sur la structure portante (S), soit sur une partie appropriée de l'ossature de base du véhicule.

7. Véhicule selon 1, 2, 3, 4, 5 ou 6, caractérisé en ce que la structure portante (S) est montée à l'arrière du véhicule avec les deux roues parallèles (2) et (3) disposées sur un même alignement axial, lesdites roues (2) et (3) étant entraînées en rotation essentiellement par un pédalier    entraînant par une chaîne (15) notamment un pignon ou système de pignons (17) coopérant avec un système de transmission (18 - 19 - 20 - 21 - 22 - 23) susceptible de commander en rotation les axes (24) - ($24^1$) desdites roues (2) et (3), ledit système de transmission étant conformé et positionné en laissant entre les roues (2) et (3), un espace entièrement libre pour l'engagement et le positionnement du chariot conteneur (E).

8. Véhicule selon 7, caractérisé en ce qu'un carénage (26) convenablement profilé, est monté d'une manière amovible, en combinaison avec l'ossature de base du véhicule et/ou la structure portante (S), pour assurer la protection de tous les éléments de transmission, à partir du pédalier jusqu'aux roues arrière (2) et (3).

9. Véhicule selon 1, 2, 3, 4, 5 ou 6, caractérisé en ce que la structure portante (S) est montée à l'avant du véhicule avec les deux roues parallèles (37) et (38), sur un même alignement axial, ladite structure (S) étant solidaire d'un élément (40) monté libre en rotation en bout du tube de direction (7), pour être commandée en direction avec les roues (37) et (38) ; un carénage (41) pouvant être monté à la base de la structure (S).

10. Véhicule selon 3, caractérisé en ce que la partie arrière du conteneur (30) forme une porte rabattable (30$^2$) susceptible d'être maintenue dans différentes positions, par une chaînette (30$^3$) notamment.

11. Véhicule selon 1, caractérisé en ce qu'en variante, la ou les roues motrices sont entraînées par un petit moteur électrique susceptible de fonctionner en génératrice dans les descentes, pour restituer du courant en vue de charger l'accumulateur d'alimentation dudit moteur.

12. Véhicule selon 1, caractérisé en ce qu'il comprend : un système de freinage avec frein à mâchoires sur la roue avant (1) ou arrière (39) et freins à tambour sur les roues arrière (2) et (3) ou avant (37) et (38), avec dans certains cas, un moyen de blocage en position des roues, évitant au véhicule de se déplacer lorsque l'on engage (ou retire) le chariot (E) de la structure portante (S) ; des amortisseurs télescopiques (34) sur la fourche avant (8) et des amortisseurs à friction (35) pour les roues arrière (2) et (3) ou avant (37) et (38) ; un changement de vitesse ; un équipement d'éclairage et enfin tous accessoires susceptibles d'équiper des cycles.

FIG.1

FIG.5

FIG.1bis

FIG.2

FIG.3

FIG.4

FIG.7

FIG.6

FIG.11

FIG.8

FIG.9

FIG.10